# EUROPÄISCHE PATENTSCHRIFT

(11) **EP 3 006 178 B1**
(45) Veröffentlichungstag und Bekanntmachung des Hinweises auf die Patenterteilung: **25.04.2018**
(21) Anmeldenummer: 15002743.1
(22) Anmeldetag: 23.09.2015
(51) Int. Cl.: B29B 17/02, B02C 19/18, G10K 15/06

(54) **VERFAHREN ZUM AUFTRENNEN VON FASERVERBUNDWERKSTOFFEN**
METHOD FOR SEPARATING FIBRE COMPOSITE MATERIALS
PROCEDE DE SEPARATION DE MATIERES COMPOSITES FIBREUSES

(30) Priorität: 24.09.2014 DE 102014013857
(43) Veröffentlichungstag der Anmeldung: 13.04.2016
(73) Patentinhaber: Beckmann, Jörg, 31139 Hildesheim (DE)
(72) Erfinder: Beckmann, Jörg, 31139 Hildesheim (DE)
(74) Vertreter: Friedrich, Andreas

(56) Entgegenhaltungen:
- EP-A1- 2 516 064
- US-A1- 2012 132 732
- Maxime Roux ET AL: "HIGH PERFORMANCE THERMOPLASTIC COMPOSITE PROCESSING AND RECYCLING: FROM CRADLE TO CRADLE", Proceedings of the SAMPE Europe 34th SEICO International Technical Conference, 1. Januar 2013 (2013-01-01), Seiten 145-150, XP055253795, Gefunden im Internet: URL:http://www.selfrag.com/pdf/publication s/Article-SEICO13-High-PerformanceThermopl astic-composite.pdf [gefunden am 2016-02-29]

## Beschreibung

Die Erfindung betrifft ein Verfahren zum Auftrennen von wenigstens einem Faserverbundwerkstoff, wobei der wenigstens eine Faserverbundwerkstoff in einer dielektrischen Flüssigkeit wenigstens einer Druckwelle ausgesetzt wird, die durch einen elektrischen Funkenschlag in der dielektrischen Flüssigkeit erzeugt wurde.

Ein derartiges Verfahren ist beispielsweise aus der US 2012/0132732 A1 bekannt. Auch aus dem Artikel "High Performance Thermoplastic Composite Processing and Recycling: From Cradle to Cradle" von Maxime Roux et al, Proceedings of the SAMPE Europe 34th SEICO International Technical Conference, 1. Januar 2013, Seiten 145 bis 150, ist ein ähnliches Verfahren bekannt, bei dem jedoch die Faserverbundwerkstoffe direkt dem elektrischen Funkenschlag ausgesetzt werden.

Faserverbundwerkstoffe werden heute aufgrund ihrer besonderen physikalischen Eigenschaften in einer Vielzahl unterschiedlicher Anwendungen verwendet. Faserverbundwerkstoffe, beispielsweise Kohlefaser- oder Glasfaserverbundwerkstoffe, weisen bei einem sehr geringen Eigengewicht eine sehr hohe Eigenstabilität gegen mechanische Beanspruchungen auf. So werden insbesondere glasfaserverstärkte Kunststoffe heute beispielsweise im Yachtbau, im Flugzeugbau und als Rohstoff für die Herstellung von Rotorblättern beispielsweise für Windkraftanlagen verwendet. Insbesondere Faserverbundwerkstoffe im Flugzeugbau aber auch im Endbereich von langen Rotorblättern sind im Laufe der Zeit sehr hohen mechanischen Belastungen ausgesetzt, so dass sie regelmäßig gewartet und gegebenenfalls ausgetauscht werden müssen. Nachteilig ist jedoch, dass die einmal ausgehärteten faserverstärkten Kunststoffe nahezu nicht wieder recycelbar sind, da die oftmals teuren Fasern nicht aus dem ausgehärteten Kunststoff oder Kunstharz herausgelöst werden können.

Der Erfindung liegt daher die Aufgabe zugrunde, ein Verfahren vorzuschlagen, mit dem Faserverbundwerkstoffe aufgetrennt werden können, so dass die einzelnen Bestandteile der Wiederverwertung zugänglich sind.

Die Erfindung löst die gestellte Aufgabe durch ein Verfahren zum Auftrennen von wenigstens einem Faserverbundwerkstoff gemäß dem Oberbegriff des Anspruchs 1, das sich dadurch auszeichnet, dass die dielektrische Flüssigkeit polymerisierbar ist und polymerisiert wird, nachdem der Faserverbundwerkstoff der wenigstens einen Druckwelle ausgesetzt wurde.

Dieses Verfahren, das auch als "Schockwellenverfahren" oder "Schockwellenzertrümmerung" bekannt ist, wird im Stand der Technik verwendet, um Festkörper insbesondere aus thermoplastischen und/oder elastomeren Kunststoffen zu zerkleinern. Ein entsprechendes Verfahren und eine dafür nötige Vorrichtung sind beispielsweise aus der DE 10 2009 060 560 B3 bekannt.

Der Erfindung liegt die überraschende Erkenntnis zugrunde, dass das an sich bekannte Verfahren zum Zerkleinern von thermoplastischen und/oder elastomeren Kunststoffen auch verwendet werden kann, um Faserverbundwerkstoffe aufzutrennen. Überraschenderweise werden durch die wenigstens eine Druckwelle die Fasern aus dem sie umgebenen Kunststoff oder Kunstharz herausgelöst und der Faserverbundwerkstoff wird nicht einfach zerkleinert.

Dies ist überraschend, da Faserverbundwerkstoffe eine hervorragende Faseranbindung an das Matrixmaterial aufweisen und daher eigentlich auch eine Zerkleinerung der Fasern zu erwarten wäre.

Eine Vorrichtung zur Durchführung dieses Verfahrens verfügt über einen Behälter, in dem sich die dielektrische Flüssigkeit befindet und in den auch der wenigstens eine Faserverbundwerkstoff beispielsweise in Form eines Granulates oder in größeren Partikeln oder Stücken von Bauteilen eingebracht wird. In die Flüssigkeit ragen in der Regel beispielsweise zwei Elektroden, zwischen denen eine elektrische Hochspannung angelegt werden kann. Dies geschieht in Form eines elektrischen Spannungspulses, der dafür sorgt, dass es zwischen den beiden Elektroden in der dielektrischen Flüssigkeit zu einem elektrischen Funkenschlag kommt. Dadurch wird eine Schock- oder Druckwelle erzeugt, die sich aufgrund der Inkompressibilität der dielektrischen Flüssigkeit sehr schnell ausbreitet und auf den sich in der Flüssigkeit befindenden Faserverbundwerkstoff trifft. Je nach Faserverbundwerkstoff und/oder der gewünschten Teilchengröße insbesondere des von den Fasern zu lösenden Kunststoffes kann die Anzahl der elektrischen Hochspannungspulse, die für die Funkenschläge sorgen, angepasst und eingestellt werden.

Vorteilhafterweise handelt es sich bei dem wenigstens einen Verbundwerkstoff um einen Kohlefaser- oder einen Glasfaserverbundwerkstoff. Überraschenderweise werden selbst die Glasfasern eines glasfaserverstärkten Kunststoffes durch die auf sie aufgebrachten Schock- oder Druckwellen nicht oder nicht nennenswert zerstört oder zerkleinert, sondern nahezu vollständig aus dem sie umgebenden Kunststoff oder Kunstharz herausgelöst.

Ein erfindungsgemäßes Verfahren hat den Vorteil, dass sich nachdem der Faserverbundwerkstoff mit der wenigstens einen Druckwelle beaufschlagt wurde, sowohl der Kunststoff oder das Kunstharz als auch die im Faserverbundwerkstoff ursprünglich enthaltenen Fasern in der dielektrischen Flüssigkeit befinden und lediglich herausgefiltert werden müssen. Je nach Teilchen- oder Partikelgröße kann dies gegebenenfalls bereits durch eine mechanische Filterung erreicht werden. Durch ein erfindungsgemäßes Verfahren wird es folglich möglich, faserverstärkte Kunststoffe oder Faserverbundwerkstoffe zu recyceln und der Wiederverwertung zuzuführen, ohne dass gegebenenfalls giftige oder teure Chemikalien verwendet werden müssten, die gegebenenfalls ihrerseits schwer zu entsorgen sind.

In einer bevorzugten Ausgestaltung des Verfahrens wird der wenigstens eine Faserverbundwerkstoff mehreren, insbesondere mehr als 10, besonders bevorzugt mehr als 20 Druckwellen in der dielektrischen Flüssigkeit ausgesetzt. Wie bereits dargelegt, hängt die tatsächlich gewählte Anzahl der Druckwellen von der Art und der Menge des sich in der dielektrischen Flüssigkeit befindenden Faserverbundwerkstoffes sowie der gewünschten Teilchengröße der Endprodukte ab. Da wie bereits dargelegt der elektrische Funkenschlag über einen elektrischen Hochspannungspuls erzeugt wird, der zwischen den Elektroden angelegt wird, kann auch über die Form, also dem zeitlichen Verlauf der Spannung innerhalb des Spannungspulses die Art, Form und Stärke des Funkenschlages und damit auch der wenigstens einen Druckwelle beeinflusst und auf die jeweils gewünschten Parametern eingestellt werden. In einem Verfahren, das nicht unter den Schutzbereich der Patentansprüche fällt, ist die dielektrische Flüssigkeit überkritisches oder flüssiges Kohlendioxid. Dies hat beispielsweise den Vorteil, dass es nur unter großem Druck entsteht beziehungsweise im flüssigen Zustand vorhanden ist. Sobald das flüssige oder überkritische Kohlendioxid entspannt wird, also der Druck im Innern des Behälters beispielsweise auf Normaldruck reduziert wird, geht das Kohlendioxid in den gasförmigen Zustand über, so dass die Endprodukte, also die Fasern des Faserverbundwerkstoffes und der die Fasern ursprünglich umgebende Kunststoff gegebenenfalls in Granulatform besonders einfach erhältlich sind.

Die dielektrische Flüssigkeit, in der sich die Endprodukte befinden, nachdem sie der Druckwelle ausgesetzt sind, geht in diesem Fall einfach in den gasförmigen Zustand über, so dass die Endprodukte übrig bleiben.

Vorteilhafterweise weist der wenigstens eine Faserverbundwerkstoff in einem Matrixwerkstoff eingebettete Fasern auf und die dielektrische Flüssigkeit verfügt über die gleiche Dichte wie der Matrixwerkstoff. Durch die wenigstens eine Schockwelle wird zumindest ein Teil der Fasern aus dem Matrixwerkstoff herausgelöst, so dass sich Fasern und Matrixwerkstoff getrennt voneinander in der dielektrischen Flüssigkeit befinden. Verfügt diese Flüssigkeit nun über die gleiche Dichte wie der Matrixwerkstoff sinken die herausgelösten Fasern innerhalb der dielektrischen Flüssigkeit auf den Boden, während der Matrixwerkstoff in der Flüssigkeit "schwebend" verbleibt. In einem Verfahren, das nicht unter den Schutzbereich der Patentansprüche fällt, ist die dielektrische Flüssigkeit beispielsweise eine wässrige Sodalösung.

Verfügt die dielektrische Flüssigkeit über die gleiche Dichte oder annähernd die gleiche Dichte wie der Matrixwerkstoff des wenigstens einen Faserverbundwerkstoffes lassen sich die Fasern beispielsweise durch Dekantieren aus der dielektrischen Flüssigkeit entfernen. Das verbleibende Dekantat, das den Matrixwerkstoff in der dielektrischen Flüssigkeit umfasst, kann anschließend Filtriert werden, um so den Matrixwerkstoff zu entfernen.

Erfindungsgemäß wird als dielektrische Flüssigkeit eine polymerisierbare Flüssigkeit verwendet, die polymerisiert wird, nachdem der Faserverbundwerkstoff der wenigstens einen Druckwelle ausgesetzt wurde. Die dielektrische Flüssigkeit kann beispielsweise Caprolactam sein, das zu Polyamid 6 polymerisiert wird. Alternativ dazu kann die dielektrische Flüssigkeit auch mono- und/oder polyfunktioneller Glycidether sein und zu Epoxidharz polymerisiert werden.

In einer bevorzugten Ausgestaltung des Verfahrens werden Fasern des wenigstens eine Faserverbundwerkstoffes durch Filtrieren oder Dekantieren aus der dielektrischen Flüssigkeit entfernt, bevor die dielektrische Flüssigkeit polymerisiert wird. Es kann ausreichend sein, den Matrixwerkstoff in der polymerisierbaren Flüssigkeit zu belassen.

Vorzugsweise wird zum Filtrieren wenigstens ein Polyamidgewebe verwendet. Die dielektrische Flüssigkeit kann beispielsweise durch ein solches als Filter verwendetes Gewebe geleitet werden, wobei die Fasern am Polyamidgewebe verbleiben. Vorzugsweise werden die Fasern mittels Wärme- und/oder Druckbehandlung mit dem als Filter verwendeten Polyamidgewebe verbunden. Vorzugsweise werden mittels Wärme- und/oder Druckbehandlung die Fasern und das Polyamidgewebe zu einem Formteil oder einem Halbzeug ausgeformt. Ein solches Halbzeug oder Formteil kann auf unterschiedlichste Weise weiterverarbeitet werden. So können beispielsweise die so hergestellten Halbzeuge zerkleinert werden, um rieselfähige Polyamid-Faserkonzentrate herzustellen, aus denen sich Kurzfasergranulate herstellen oder direkt Formteile spritzgießen lassen.

In einer anderen vorteilhaften Ausgestaltung des Verfahrens wird zumindest ein Teil des Matrixwerkstoffes, vorzugsweise jedoch der gesamte Matrixwerkstoff, aus der dielektrischen Flüssigkeit entfernt, bevor die dielektrische Flüssigkeit polymerisiert wird. In diesem Fall ist es von Vorteil, die durch die Schockwellen herausgelösten Fasern des Faserverbundwerkstoffes in der dielektrischen Flüssigkeit zu belassen, wenn diese polymerisiert wird. Durch die Polymerisation der dielektrischen Flüssigkeit entsteht auf diese Weise ein kurzfaserverstärkter Kunststoff.

Durch die hier beschriebenen Verfahren ist es möglich, in den zur Produktion von Faserverbundbauteilen eingesetzten Duromerwerkstoffen die Konzentration der recycelten Matrixmaterialien im Vergleich zum Stand der Technik zu erhöhen und hierdurch eine Recyclingquote von Faserverbundwerkstoffen auf wenigstens 20 Gew.-% anzuheben. Dies wird unter anderem dadurch erreicht, dass die durch das hier beschriebene Verfahren hergestellten Matrixmaterialien faserfrei oder zumindest nahezu faserfrei ausgebildet werden können.

Dadurch wird die abzuführende Reaktionswärme bei der Herstellung von Duroplast-Bauteilen abgesenkt, sodass geringere Verarbeitungszeiten erreicht werden und höhere Wandstärken der in einem Verfahrensschritt hergestellten Bauteile ermöglicht werden. Zudem wird ein Schwindungsverhalten derartiger Werkstoffe durch das Einbringen von beispielsweise wenigstens 20 Gew.-% faserfreier Matrixmaterialien verbessert. Dadurch wird folglich über die Erhöhung der Recyclingquote hinaus eine Verbesserung der Verarbeitungseigenschaften sowie eine Reduzierung der Herstellungskosten für Faserverbundbauteile erreicht.

Durch die hier beschriebenen Verfahren können folglich Granulate zur Verarbeitung in einem Spritzguss- oder Extrusionsverfahren hergestellt werden. Dazu werden Fasern in einen Thermoplast oder ein entsprechendes polymerisierbares Monomer eingebracht, die nach einem hier beschriebenen Verfahren aus einem Matrixwerkstoff herausgelöst wurden. Auf diese Weise können Formteile und Halbzeuge hergestellt werden, die Fasern oder Matrixwerkstoffe enthalten, die nach einem hier beschriebenen Verfahren aus einem Faserverbundwerkstoff extrahiert wurden. Alternativ können duromere Harzsysteme hergestellt werden, die mehr als 20 Gew.-% faserfreier Matrixwerkstoffe enthalten, die durch ein hier beschriebenes Verfahren extrahiert wurden.

Vorzugsweise wird der wenigstens eine Faserverbundwerkstoff einer Extraktion unterzogen, bevor er der wenigstens einen Druckwelle ausgesetzt wird. Auf diese Weise können anhaftende oder enthaltene Chemikalien, flüchtige Bestandteile oder sonstige Chemikalien, Öle oder Additive, die bei der Herstellung des Faserverbundwerkstoffes verwendet wurden, herausgelöst werden, so dass auch diese Produkte der Wiederverwertung zugänglich sind.

Vorteilhafterweise findet die Extraktionen in einem separaten Behälter statt, in dem sich eine Extraktionsflüssigkeit befindet, in die der wenigstens eine Faserverbundwerkstoff eingebracht wird. Auch dies kann beispielsweise überkritisches oder flüssiges Kohlendioxid oder ein Lösungsmittel, wie beispielsweise Aceton, sein. In einer konstruktiv besonders einfachen Ausgestaltung findet die Extraktion in der dielektrischen Flüssigkeit statt. Als konstruktiv besonders einfach hat sich herausgestellt, wenn die Extraktion in dem gleichen Behälter stattfindet, in dem auch die wenigstens eine Druckwelle erzeugt wird.

Versuche haben gezeigt, dass der Verbund des Fasergewebes durch die wenigstens eine Druckwelle aufgelöst und aufgetrennt wird. Dabei bleiben die einzelnen Fasern, die sich im Faserverbundwerkstoff befunden haben, erhalten. Dies ist durch herkömmliche aus dem Stand der Technik bekannte Verfahren nicht möglich. Auf diese Weise wird es möglich, teure Faserverbundwerkstoffe der Verwertung zuzuführen und die teuren Fasern sowie das diese umgebende Duroplast dem Werkstoffkreislauf wieder zuzuführen. In einer Versuchsanordnung wurden Teile von Bauteilen aus einem glasfaserverstärkten Kunststoff 21 Druckwellen ausgesetzt, die mit einer Hochspannung von 14 kV erzeugt wurden. Dabei wurden Faser mit einer Länge von 2 bis 7 mm und einer Breite von 0,7 bis 1 mm problemlos aus dem kompakten Kunststoff herausgelöst und blieben erhalten. Die längsten aufgefundenen Fasern hatten eine Länge von bis zu 4 cm. Nachdem das hier beschriebene Verfahren durchgeführt wird, kann die Qualität der Endprodukte überprüft werden. Dabei kann das Augenmerk insbesondere darauf gelegt werden, wie gut die Trennung zwischen den Fasern des Faserbundwerkstoffes und dem diese umgebenden Kunststoff gelungen ist. Sollten die Fasern noch mit einem Teil des sie umgebenden Kunststoffes verklebt und verbunden sein, können diese als Faserverbundwerkstoffe erneut dem Verfahren zugeführt werden, bis die gewünschte Qualität erreicht ist.

## Patentansprüche

1. Verfahren zum Auftrennen von wenigstens einem Faserverbundwerkstoff, wobei der wenigstens eine Faserbundwerkstoff in einer dielektrischen Flüssigkeit wenigstens einer Druckwelle ausgesetzt wird, die durch einen elektrischen Funkenschlag in der dielektrischen Flüssigkeit erzeugt wurde, **dadurch gekennzeichnet, dass** die dielektrische Flüssigkeit polymerisierbar ist und polymerisiert wird, nachdem der Faserverbundwerkstoff der wenigstens einen Druckwelle ausgesetzt wurde.

2. Verfahren nach Anspruch 1, **dadurch gekennzeichnet, dass** der wenigstens eine Faserverbundwerkstoff ein Kohlefaser- oder ein Glasfaserverbundwerkstoff ist.

3. Verfahren nach Anspruch 1 oder 2, **dadurch gekennzeichnet, dass** der wenigstens eine Faserverbundwerkstoff mehreren, insbesondere mehr als 10, besonders bevorzugt mehr als 20 Druckwellen in der dielektrischen Flüssigkeit ausgesetzt wird.

4. Verfahren nach einem der vorstehenden Ansprüche, **dadurch gekennzeichnet, dass** der wenigstens eine Faserverbundwerkstoff in einem Matrixwerkstoff eingebettete Fasern aufweist und die dielektrische Flüssigkeit die gleiche Dichte aufweist wie der Matrixwerkstoff.

5. Verfahren nach einem der vorstehenden Ansprüche, **dadurch gekennzeichnet, dass** die dielektrische Flüssigkeit Caprolactam ist, das zu Polyamid 6 polymerisiert wird.

6. Verfahren nach einem der vorstehenden Ansprüche 1 bis 4, **dadurch gekennzeichnet, dass** die dielektrische Flüssigkeit mono- und/oder polyfunktioneller Glycidether ist und zu Epoxidharz polymerisiert wird.

7. Verfahren nach einem der vorstehenden Ansprüche, **dadurch gekennzeichnet, dass** Fasern des wenigstens einen Faserverbundwerkstoffes durch Filtrieren oder Dekantieren aus der dielektrischen Flüssigkeit entfernt werden, bevor die dielektrische Flüssigkeit polymerisiert wird.

8. Verfahren nach Anspruch 7, **dadurch gekennzeichnet, dass** wenigstens ein Polyamidgewebe als Filter für die Filtrierung benutzt wird und die Fasern mittels Wärme- und/oder Druckbehandlung mit dem Polyamidgewebe verbunden werden.

9. Verfahren nach Anspruch 8, **dadurch gekennzeichnet, dass** mittels Wärme- und/oder Druckbehandlung die Fasern und das Polyamidgewebe zu einem Formteil oder einem Halbzeug ausgeformt werden.

10. Verfahren nach einem der Ansprüche 1 bis 6, **dadurch gekennzeichnet, dass** zumindest ein Teil des Matrixwerkstoffes, vorzugsweise der gesamte Matrixwerkstoff, aus der dielektrischen Flüssigkeit entfernt wird, bevor die dielektrische Flüssigkeit polymerisiert wird.

11. Verfahren nach einem der vorstehenden Ansprüche, **dadurch gekennzeichnet, dass** der wenigstens eine Faserverbundwerkstoff einer Extraktion unterzogen wird, bevor er der wenigstens einen Druckwelle ausgesetzt wird.

12. Verfahren nach einem der vorstehenden Ansprüche, **dadurch gekennzeichnet, dass** die Extraktion in der dielektrischen Flüssigkeit stattfindet.

13. Verfahren nach einem der vorstehenden Ansprüche, **dadurch gekennzeichnet, dass** die Extraktion in dem gleichen Behälter stattfindet, in dem auch die wenigstens eine Druckwelle erzeugt wird.

## Claims

1. Method for separating at least one fiber composite material, the at least one fiber composite material being subjected to at least one pressure wave in a dielectric liquid, which pressure wave has been generated by an electric spark discharge in the dielectric liquid, **characterized in that** the dielectric liquid can be polymerized and is polymerized after the fiber composite material has been subjected to the at least one pressure wave.

2. Method according to claim 1, **characterized in that** the at least one fiber composite material is a carbon fiber composite material or a glass fiber composite material.

3. Method according to either claim 1 or claim 2, **characterized in that** the at least one fiber composite material is subjected to a plurality of pressure waves in the dielectric liquid, in particular more than 10, particularly preferably more than 20.

4. Method according to any of the preceding claims, **characterized in that** the at least one fiber composite material comprises fibers embedded in a matrix material, and the dielectric liquid has the same density as the matrix material.

5. Method according to any of the preceding claims, **characterized in that** the dielectric liquid is caprolactam, which is polymerized to form polyamide 6.

6. Method according to any of claims 1 to 4, **characterized in that** the dielectric liquid is mono- and/or polyfunctional glycidyl ether and is polymerized to form epoxy resin.

7. Method according to any of the preceding claims, **characterized in that** fibers of the at least one fiber composite material are removed from the dielectric liquid by filtration or decanting before the dielectric liquid is polymerized.

8. Method according to claim 7, **characterized in that** at least one polyamide woven fabric is used as the filter for filtration and the fibers are connected to the polyamide woven fabric by means of heat treatment and/or pressure treatment.

9. Method according to claim 8, **characterized in that** the fibers and the polyamide woven fabric are shaped into a molded part or a semi-finished product by means of heat treatment and/or pressure treatment.

10. Method according to any of claims 1 to 6, **characterized in that** at least some of the matrix material, preferably all of the matrix material, is removed from the dielectric liquid before the dielectric liquid is polymerized.

11. Method according to any of the preceding claims, **characterized in that** the at least one fiber composite material undergoes extraction before it is subjected to the at least one pressure wave.

12. Method according to any of the preceding claims, **characterized in that** the extraction takes place in the dielectric liquid.

13. Method according to any of the preceding claims, **characterized in that** the extraction takes place in the same container in which the at least one pressure wave is also generated.

## Revendications

1. Procédé pour la séparation d'au moins un matériau composite à base de fibres, dans lequel ledit au moins un matériau composite à base de fibres est soumis, dans un liquide diélectrique, à au moins une onde de compression qui a été engendrée par une décharge électrique dans le liquide diélectrique,
**caractérisé en ce que** le liquide diélectrique est susceptible d'être polymérisé et est polymérisé après que le matériau composite à base de fibres a été soumis à ladite au moins une onde de compression.

2. Procédé selon la revendication 1, **caractérisé en ce que** ledit au moins un matériau composite à base de fibres est un matériau composite à base de fibres de carbone ou de fibres de verre.

3. Procédé selon la revendication 1 ou 2, **caractérisé en ce que** ledit au moins un matériau composite à base de fibres est soumis à plusieurs ondes de compression dans le liquide diélectrique, en particulier à plus de 10 et de de façon particulièrement préférée à plus de 20 ondes de compression.

4. Procédé selon l'une des revendications précédentes, **caractérisé en ce que** ledit au moins un matériau composite à base de fibres comprend des fibres noyées dans un matériau de matrice, et le liquide diélectrique a la même densité que le matériau de matrice.

5. Procédé selon l'une des revendications précédentes, **caractérisé en ce que** le liquide diélectrique est du caprolactame, qui est polymérisé en donnant du polyamide 6.

6. Procédé selon l'une des revendications précédentes 1 à 4, **caractérisé en ce que** le liquide diélectrique et un éther glycidique monofonctionnel et/ou difonctionnel et est polymérisé en donnant une résine époxy.

7. Procédé selon l'une des revendications précédentes, **caractérisé en ce que** des fibres dudit au moins un matériau composite à base de fibres sont éliminées hors du liquide diélectrique par filtration ou par décantation, avant que le liquide diélectrique soit polymérisé.

8. Procédé selon la revendication 7, **caractérisé en ce que** l'on utilise au moins un textile en polyamide à titre de filtre pour la filtration et les fibres sont reliées au textile en polyamide au moyen d'un traitement de chauffage et/ou de compression.

9. Procédé selon la revendication 8, **caractérisé en ce que** les fibres et le textile en polyamide sont mis en forme au moyen d'un traitement de chauffage et/ou de compression pour donner une pièce conformée ou un produit semi-fini.

10. Procédé selon l'une des revendications 1 à 6, **caractérisé en ce qu'**au moins une partie du matériau de matrice, de préférence la totalité du matériau de matrice, est éliminée hors du liquide diélectrique avant de polymériser le liquide diélectrique.

11. Procédé selon l'une des revendications précédentes, **caractérisé en ce que** ledit au moins un matériau composite à base de fibres est soumis à une extraction avant d'être soumis à ladite au moins une onde de compression.

12. Procédé selon l'une des revendications précédentes, **caractérisé en ce que** l'extraction a lieu dans le liquide diélectrique.

13. Procédé selon l'une des revendications précédentes, **caractérisé en ce que** l'extraction a lieu dans le même conteneur dans lequel est également engendrée ladite au moins une onde de compression.
